# EUROPÄISCHE PATENTSCHRIFT

(11) **EP 0 997 052 B1**
(45) Veröffentlichungstag und Bekanntmachung des Hinweises auf die Patenterteilung: **23.03.2005**
(21) Anmeldenummer: 98936235.5
(22) Anmeldetag: 19.06.1998
(51) Int. Cl.: H04Q 11/04

(54) **VERFAHREN ZUM STEUERN EINES NETZKNOTENS UND EINES TELEKOMMUNIKATIONSNETZWERKS SOWIE NETZKNOTEN**
METHOD FOR CONTROLLING A NETWORK NODE AND A TELECOMMUNICATIONS NETWORK AND NETWORK NODE
NOEUD DE RESEAU ET PROCEDE POUR COMMANDER UN NOEUD DE RESEAU ET UN RESEAU DE TELECOMMUNICATION

(30) Priorität: 21.07.1997 DE 19731289
(43) Veröffentlichungstag der Anmeldung: 03.05.2000
(73) Patentinhaber: SIEMENS AKTIENGESELLSCHAFT, 80333 München (DE)
(72) Erfinder: PETRI, Bernhard, D-81477 München (DE)
(86) Internationale Anmeldenummer: PCT/DE1998/001692
(87) Internationale Veröffentlichungsnummer: WO 1999/005882

(56) Entgegenhaltungen:
- EP-A- 0 765 101
- VEERARAGHAVAN M ET AL: "PARALLEL CONNECTION CONTROL (PCC) ALGORITHM FOR ATM NETWORKS" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 3, 23. Juni 1996, Seiten 1635-1641, XP000625086 INSTITUTE OF ELECTRICAL & ELECTRONICS ENGINEERS
- ONVURAL R O ET AL: "Structure and use of signaling in B-ISDNs" COMPUTER NETWORKS AND ISDN SYSTEMS, Bd. 28, Nr. 3, Januar 1996, Seite 307-323 XP000553085

## Beschreibung

Die Erfindung betrifft ein Verfahren zum Steuern eines Netzknotens in einem Telekommunikationsnetzwerk nach dem Oberbegriff des Anspruchs 1, ein Verfahren zum Steuern eines Telekommunikationsnetzwerks nach dem Oberbegriff des Anspruchs 9 und einen Netzknoten nach dem Oberbegriff des Anspruchs 12. Die Erfindung ist in allen Anwendungsbereichen einsetzbar, bei denen Daten oder Datenströme an mehrere Benutzer und/oder Endgeräte verteilt werden sollen und insbesondere Punkt-zu-Mehrpunkt-Verbindungen bereitgestellt werden sollen.

Besonders ist die Erfindung zum Einsatz bei Telepartizipationsanwendungen vorgesehen. Dies sind Anwendungen, bei denen ein Benutzer an einer Life-Veranstaltung, beispielsweise einer Sportveranstaltung oder einer Diskussion, per Telekommunikation teilnehmen kann, wobei der Teilnehmer zumindest ebenso viele Informationen erhalten soll, wie wenn er persönlich anwesend wäre. Weitere mögliche Anwendungen der Erfindung sind beispielsweise die Verbreitung von Fernseh- oder videoprogrammen an einen potentiell sehr großen Empfängerkreis ("pay TV", "video on demand").

ATM-Netze, wie sie beispielsweise in den Dokumenten des ATM-Forums spezifiziert sind, weisen mehrere Netzknoten und mehrere Endgeräte auf. In solchen Netzen können Punkt-zu-Mehrpunkt-Verbindungen durch eine Baumstruktur über mehrere Netzknoten gebildet werden, wobei jeder dieser Netzknoten mindestens einen eingehenden Datenstrom an je mindestens einen anderen Netzknoten und/oder mindestens ein Endgerät weiterleitet (siehe die Empfehlung ITU-T Q.2971 der International Telecommunication Union, oder auch den Fachartikel: VEERARAGHAVAN M ET AL: "PARALLEL CONNECTION CONTROL (PCC) ALGORITHM FOR ATM NETWORKS" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, Bd. 3, 23. Juni 1996 (1996-06-23), Seiten 1635-1641, XP000625086 INSTITUTE OF ELECTRICAL & ELECTRONICS ENGINEERS). Ferner ist im Dokument "ATM user-network interface signalling specification" des ATM-Forums (Nummer af-sig-0061.000, Juli 1996, Abschnitt 6) eine durch die Datensenke angestoßene Teilnahme ("leaf initiated join") an einer derartigen Verbindung spezifiziert.

Mit diesen Mitteln könnte grundsätzlich eine Telepartizipationsanwendung bereitgestellt werden. Allerdings ist das Verfahren sehr aufwendig, da in jedem Netzknoten, durch den die Verbindung läuft, für jeden angeschlossenen Teilnehmer zwei Teilnehmerprozesse verwaltet werden müssen. Die Teilnehmerprozesse kommunizieren untereinander mit speziellen, teilnehmerbezogenen Nachrichten. Die Teilnehmerprozesse werden auch in Netzknoten ausgeführt, die nicht an Endgeräte angeschlossen sind, sondern lediglich Informationen an andere Netzknoten weiterleiten. Da die an einer Punkt-zu-Mehrpunkt-Verbindung beteiligten Netzknoten eine Baumstruktur bilden, steigt die zu verwaltende Informationsmenge mit zunehmender Nähe zur Datenquelle (Wurzel des Baumes) exponentiell an. Für Massenanwendungen (wie beispielsweise die Übertragung von Sportveranstaltungen mit einer Vielzahl von Kameraperspektiven) ist das Verfahren daher nicht brauchbar, und auch für viele andere Anwendungsfälle ist es unnötig komplex.

Die Erfindung hat demgemäß die Aufgabe, ein Verfahren zum Steuern eines Netzknotens beziehungsweise eines Telekommunikationsnetzwerks sowie einen Netzknoten bereitzustellen, bei denen die gewünschte Verteilung von Datenströmen mit geringem Aufwand möglich ist, und die insbesondere auch für Massenanwendungen oder für Anwendungen mit vielen an einer Verbindung beteiligten Netzknoten wirtschaftlich einsetzbar sind.

Erfindungsgemäß wird diese Aufgabe durch ein Verfahren mit den Merkmalen des Anspruchs 1, ein Verfahren mit den Merkmalen des Anspruchs 8 und einen Netzknoten mit den Merkmalen des Anspruchs 11 gelöst.

Die Erfindung geht von der Grundidee aus, auf die Verwaltung der an einen Netzknoten angeschlossenen Teilnehmer oder Endgeräte möglichst weitgehend zu verzichten. Dies ist zumindest für bestehende Verbindungen zu anderen Netzknoten vorgesehen. Unter einer bestehenden Verbindung wird eine Verbindung verstanden, die sich nicht gerade in einer Auf- oder Abbauphase oder in einem Fehler-, Ausnahme- oder sonstigen außergewöhnlichen Betriebszustand befindet. Verbindungen zu anderen Netzknoten sind im Gegensatz zu Verbindungen verstehen, die unmittelbar zu Endgeräten verlaufen. Teilnehmer- und datensenkenbezogene Informationen sind beispielsweise Adressen, Referenzen oder sonstige Bezugnahmen auf einen Teilnehmer der Verbindung beziehungsweise auf ein als Datensenke dienendes Endgerät. Verbindungsbezogene Informationen sind als Informationen zu verstehen, die sich auf das Empfangen, Senden und Weiterleiten von Datenströmen durch den Netzknoten sowie auf die Konfiguration und den internen Zustand des Netzknotens beziehen.

Durch die erfindungsgemäße Lösung ist die aufwendige Verwaltung von teilnehmer- oder datensenkenbezogenen Informationen nicht mehr (oder nur noch in geringerem Maße) erforderlich. Es brauchen lediglich (oder zumindest hauptsächlich) verbindungsbezogene Informationen gespeichert und verwaltet zu werden, die unabhängig von der Anzahl der Teilnehmer sind. Dadurch bietet die Erfindung große Einsparmöglichkeiten hinsichtlich der für eine Anwendung erforderlichen Hard- und Software. Massenanwendungen werden durch die Erfindung erst ermöglicht.

Erfindungsgemäß ist nicht ausgeschlossen, daß teilnehmeroder datensenkenbezogene Informationen für solche Verbindungen ausgewertet, verarbeitet und/oder gespeichert werden, die unmittelbar zwischen dem Netzknoten und einem Endgerät (Datenquelle oder Datensenke) bestehen. Bei derartigen Verbindungen bietet sich der Netzknoten als Abrechnungs- und/oder Authentifizierungsstelle an. Die Authentifizierung kann beispielsweise mittels eines teilnehmer- oder datensenkenbezogenen Kennwortes erfolgen. Zur Abrechnung können Gebühren erhoben werden, die von der Verbindungsdauer abhängig sind.

Bevorzugt wird jedoch ein Netzknoten nicht davon beeinflußt, ob an ihn Datensenken, Endgeräte oder andere Netzknoten angeschlossen sind, oder er ist als sogenannter Transfer-Knoten ausschließlich für den Anschluß anderer Netzknoten vorgesehen. In einer bevorzugten Ausführungsform erfolgt die Verwaltung bestehender Verbindungen zu anderen Netzknoten des Telekommunikationsnetzwerks unabhängig sowohl von endgeräte- als auch von teilnehmerbezogenen Informationen, also unabhängig von Informationen, die Teilnehmer, Datenquellen oder Datensenken betreffen.

Ferner schließt die Erfindung nicht aus, daß teilnehmer- oder datensenkenbezogene Informationen beispielsweise während der Auf- oder Abbauphasen von Verbindungen mit anderen Netzknoten ausgewertet werden. Diese Informationen können auch gespeichert werden, ohne daß durch die bloße Speicherung schon eine Abhängigkeit der aufgebauten Verbindung von diesen Informationen begründet werden würde.

In einer bevorzugten Ausführungsform enthält der Verbindungsdatenbestand für jede aktive Schnittstelle und jeden dort ein- oder ausgehenden Datenstrom einen Datenstrombezeichner sowie eine Angabe der Datenflußrichtung. Bei einem unidirektionalen Datenstrom sind mögliche Datenflußrichtungen "eingehend" und "ausgehend", während bei potentiell bidirektionalen Datenströmen eine zusätzliche Datenflußrichtung "bidirektional" existiert. Bevorzugt sind außer den genannten Informationen keine weiteren Angaben im Verbindungsdatenbestand enthalten, oder nur solche Angaben, die unabhängig von der Art und/oder Anzahl der angeschlossenen Datensenken und/oder Endgeräte und/oder Teilnehmer sind.

Der Verbindungsdatenbestand wird vorzugsweise möglichst selten aktualisiert, um den Verwaltungsaufwand gering zu halten. Bevorzugt findet eine Aktualisierung nur im Zusammenhang mit einem Verbindungsaufbau oder einem Verbindungsabbau statt.

Der Verbindungsaufbau wird vorzugsweise dezentral von einem Teilnehmer oder einem als Datensenke dienenden Endgerät angestoßen. Vorzugsweise wird dabei ein Verbindungszweig von dem Endgerät hin zu einer baumförmigen Verbindungsstruktur aufgebaut. Der neu aufgebaute Verbindungszweig kann über mehrere Netzknoten laufen, die bisher noch nicht an der Verbindung beteiligt waren. Sobald beim Verbindungsaufbau die bestehende Verbindungsstruktur erreicht ist, ist der Aufbauvorgang beendet, so daß innerhalb der bestehenden Verbindungsstruktur kein oder nur geringer Verwaltungsaufwand erforderlich ist.

Ebenso erfolgt der Abbau von Verbindungszweigen vorzugsweise dezentral als Reaktion auf eine von einem Teilnehmer stammende Nachricht. Auch der Verbindungsabbau betrifft vorzugsweise nur den nicht mehr benötigten Zweig der Verbindungsstruktur und verursacht bevorzugt keinen Verwaltungsaufwand bei Netzknoten, die nicht unmittelbar vom Verbindungsabbau betroffen sind. Ferner ist vorzugsweise eine Möglichkeit zum Abbau der gesamten Verbindungsstruktur durch ein als Datenquelle dienendes Endgerät vorgesehen.

Weitere bevorzugte Ausführungsformen sind Gegenstand der übrigen Unteransprüche.

Ein Ausführungsbeispiel der Erfindung wird nun anhand der schematischen Zeichnungen genauer beschrieben. Es stellen dar:
FIG 1 einen Ausschnitt eines Telekommunikationsnetzwerks mit Endgeräten und Netzknoten, die mit einer Punkt-zu-Mehrpunkt-Verbindung verknüpft sind, und
FIG 2 eine schematische Darstellung eines Netzknotens.

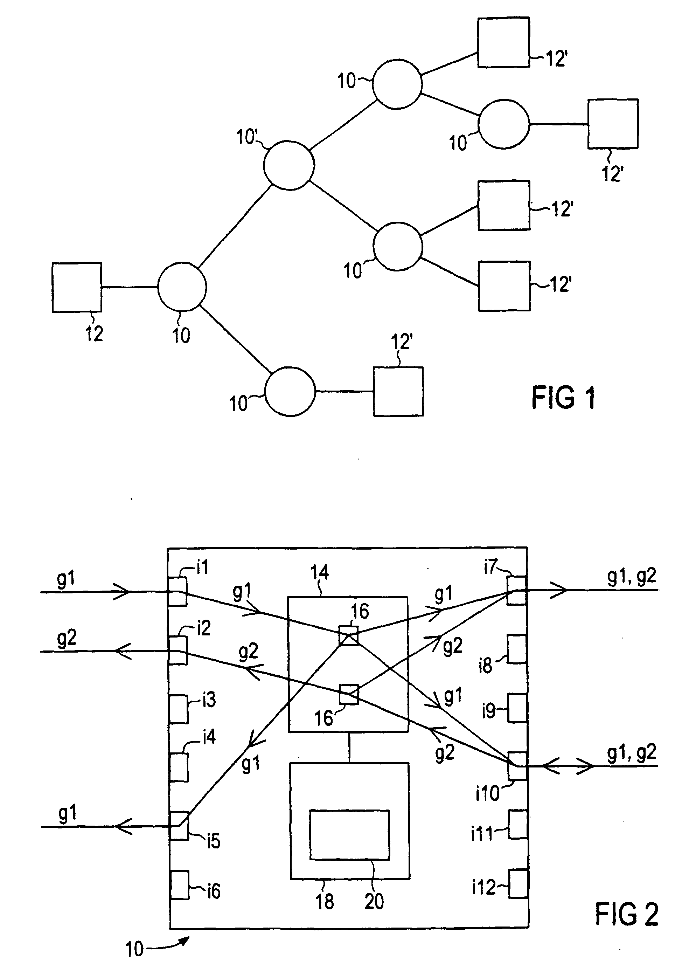

In FIG 1 sind diejenigen Elemente eines Telekommunikationsnetzwerks gezeigt, die an einer einzigen Punkt-zu-Mehrpunkt-Verbindung einer Telepartizipationsanwendung beteiligt sind.

Mehrere Netzknoten 10, 10' und mehrere Endgeräte 12, 12' sind über geeignete Kommunikationswege, beispielsweise über fest verlegte Leitungen, miteinander in einer Baumstruktur verbunden. Das gesamte Telekommunikationsnetzwerk, das beispielsweise ein ATM-Netz sein kann, weist noch weitere Netzknoten und Endgeräte auf, die über weitere Kommunikationswege untereinander sowie mit den in FIG 1 dargestellten Komponenten verbunden sind. In dem Telekommunikationsnetzwerk können gleichzeitig mehrere Punkt-zu-Mehrpunkt-Verbindungen bestehen.

Das Endgerät 12 bildet die Wurzel des Baumes. Es dient als Datenquelle für einen zu verteilenden, unidirektionalen Datenstrom, also als Anbieter der zu übertragenden Daten. Beispielsweise kann bei einer Fernsehübertragung das Endgerät 12 eine Fernsehkamera mit einer daran angeschlossenen Telekommunikationseinrichtung sein.

Jeder Netzknoten 10, 10' empfängt den Datenstrom entweder unmittelbar von dem Endgerät 12 oder von einem anderen Netzknoten 10, 10', der sich nach einer geeigneten Metrik "näher" an der Wurzel des Kommunikationsbaumes befindet, wobei die Metrik geographische Gegebenheiten, Eigenschaften der Netzknoten 10, 10' oder die im Netz zur Verfügung stehenden Kommunikationswege berücksichtigen kann. Der empfangene Datenstrom wird von dem Netzknoten 10, 10' vervielfältigt, falls dies erforderlich ist, und von der Baumwurzel weg an alle angeschlossenen Endgeräte 12' und Netzknoten 10, 10' weitergegeben. In FIG 1 sind die Netzknoten 10 alle an mindestens ein Endgerät 12, 12' unmittelbar angeschlossen, während der Netzknoten 10' ausschließlich mit anderen Netzknoten 10 in Verbindung steht und daher als Transfer-Netzknoten bezeichnet wird. Die Netzknoten 10 und 10' sind bezüglich der hier beschriebenen Eigenschaften und Funktionen identisch.

Die Endgeräte 12' stellen die Blätter des Kommunikationsbaumes und somit die Datensenken für den vom Endgerät 12 stammenden Datenstrom dar. Beispielsweise kann jedes Endgerät 12' eine private Telekommunikationseinrichtung sein, an der ein Fernsehbildschirm eines Teilnehmers angeschlossen ist.

Dem von dem Endgerät 12 erzeugten Datenstrom ist ein eindeutiger, globaler Datenstrombezeichner zugeordnet, durch den die gesamte in FIG 1 gezeigte Punkt-zu-Mehrpunkt-Verbindung global identifizierbar ist. Dieser Datenstrombezeichner ermöglicht (gegebenenfalls im Zusammenwirken mit einer Adresse des als Baumwurzel dienenden Endgerätes 12) den Aufbau der Punkt-zu-Mehrpunkt-Verbindung durch sukzessiven Anschluß der Endgeräte 12' beziehungsweise der entsprechenden Teilnehmer. Auch können sich jederzeit weitere Endgeräte 12' oder Netzknoten 10, 10' an eine bestehende Punkt-zu-Mehrpunkt-Verbindung anschließen, indem sie den globalen Datenstrombezeichner verwenden.

Im einfachsten Fall kann der Datenstrombezeichner für eine bestimmte Punkt-zu-Mehrpunkt-Verbindung bekannt und veröffentlicht sein; beispielsweise in einer Programmzeitschrift, wenn es sich um eine Fernsehübertragung handelt. Die Teilnehmer können den Datenstrombezeichner jedoch auch über ein Verzeichnis, einen Suchdienst oder eine ähnliches Einrichtung ermitteln. In einer Ausführungsalternative können auch Datenstrombezeichner verwendet werden, die nur für einen vorgegebenen Teilabschnitt des Telekommunikationsnetzwerks gültig sind und an den Grenzen zwischen den Teilabschnitten durch geeignete Einrichtungen umgesetzt werden.

Das in FIG 1 ausschnittsweise gezeigte Telekommunikationsnetzwerk weist ferner ein an sich bekanntes Nachrichtensystem zum Austausch von Steuernachrichten zwischen den Netzknoten 10, 10' und den Endgeräten 12, 12' auf, um den Aufbau und das Freigeben von Verbindungen sowie sonstige Vorgänge anzustoßen, zu steuern und zu bestätigen. Bei dem hier beschriebenen Ausführungsbeispiel werden die Steuernachrichten auf den gleichen Kommunikationswegen wie die eigentlichen Datenströme übertragen. Jedoch können die Steuernachrichten bidirektional ausgetauscht werden, während für die eigentliche Datenübertragung nur unidirektionale Datenströme vorgesehen sind. In Ausführungsalternativen der Erfindung können für die Steuernachrichten Übertragungswege verwendet werden, die von den Übertragungswegen für die Datenströme getrennt sind. Ferner können in Ausführungsalternativen bidirektionale Datenströme statt der oder zusätzlich zu den unidirektionalen Datenströmen vorgesehen sein. Auch mit bidirektionalen Datenströmen kann eine baumförmige Punkt-zu-Mehrpunkt-Verbindung hergestellt werden, indem zusammenfließende Datenströme geeignet gemischt werden.

In FIG 2 ist der Aufbau eines der Netzknoten 10 (beziehungsweise des identischen Netzknotens 10') genauer dargestellt. Der Netzknoten 10 weist in dem hier beschriebenen Ausführungsbeispiel zwölf Schnittstellen i1, i2, ..., i12 auf, an denen jeweils gleichzeitig mehrere Datenströme, auch ein- und ausgehende Datenströme gemischt, anliegen können. Durch ein Verbindungsmodul 14, das im hier beschriebenen Ausführungsbeispiel zwei Verbindungspunkte 16 aufweist, kann ein an einer Schnittstelle i1, i2, ..., i12 eingehender Datenstrom an eine oder mehrere Schnittstellen i1, i2, ..., i12 zur Ausgabe an weitere Netzknoten 10, 10' oder Endgeräte 12' weitergeleitet werden. Der Begriff "Schnittstelle" ist dabei als logische Schnittstelle zu verstehen. In dem hier beschriebenen Ausführungsbeispiel entspricht eine Schnittstelle i1, i2, ..., i12 genau einer physischen Ein-/Ausgabeleitung des Netzknotens 10 (zum Beispiel einer Glasfaserleitung). In Ausführungsalternativen können jedoch auch die Signale mehrerer Schnittstellen i1, i2, ..., i12 auf eine Ein-/Ausgabeleitung gemultiplext werden, oder mehrere Ein-/Ausgabeleitungen können an eine Schnittstelle i1, i2, ..., i12 angeschlossen sein.

Das verbindungsmodul 14 und die sonstigen Komponenten des Netzknotens 10 werden von einem Steuermodul 18 gesteuert, das einen Speicher für einen Verbindungsdatenbestand 20 aufweist. In dem hier beschriebenen Ausführungsbeispiel ist das Verbindungsmodul 14 als Hardwareschaltung ausgebildet, und das Steuermodul 18 weist einen an sich bekannten Mikrocomputer mit Zentraleinheit, Programm- und Datenspeicher sowie Hilfsbaugruppen auf. In Ausführungsalternativen können die Funktionen des Netzknotens 10 beliebig auf Hard- und Softwarekomponenten verteilt werden. Beispielsweise kann der Hardwareanteil des Verbindungsmoduls 14 auf ein Minimum reduziert werden, indem mit der Weiterleitung der Datenströme zusammenhängende Aufgabe auf Softwaremodule im Steuermodul 18 verlagert werden.

In dem in FIG 2 gezeigten Verbindungszustand des Netzknotens 10 wird ein an der Schnittstelle i1 eingehender Datenstrom mit dem Datenstrombezeichner g1 an die Schnittstellen i5, i7 und i10 weitergeleitet, und ein an der Schnittstelle i10 eingehender Datenstrom mit dem Datenstrombezeichner g2 wird an den Schnittstellen i2 und i7 ausgegeben. Dieser Verbindungszustand spiegelt sich in dem Verbindungsdatenbestand 20 wider. Der Verbindungsdatenbestand 20 ist eine Liste, die für jeden an einer Schnittstelle ein- oder ausgehenden Datenstrom ein Tripel aus dem Namen der Schnittstelle, dem Datenstrombezeichner und der Richtung (E für eingehend und A für ausgehend) enthält. Die folgende Tabelle zeigt den Verbindungsdatenbestand 20 für den in FIG 2 dargestellten Verbindungszustand:

| Schnittstelle | Datenstrombezeichner | Richtung des Datenflusses |
|---|---|---|
| i1 | g1 | E |
| i2 | g2 | A |
| i5 | g1 | A |
| i7 | g1 | A |
| i7 | g2 | A |
| i10 | g1 | A |
| i10 | g2 | E |

Aus der Tabelle ist ersichtlich, daß über eine Schnittstelle mehrere Datenströme mit unterschiedlichen Datenstrombezeichnern weitergeleitet und empfangen werden können. Für jeden eingehenden Datenstrom muß jedoch in dem Verbindungsdätenbestand 20 mindestens ein Eintrag dieses Datenstroms in ausgehender Richtung (über eine andere Schnittstelle) vorhanden sein. Ferner kann nur dann ein ausgehender Datenstrom in dem Verbindungsdatenbestand 20 enthalten sein, wenn dieser Datenstrom auch als eingehend aufgeführt ist.

Bei den im vorliegenden Ausführungsbeispiel betrachteten unidirektionalen Datenströmen sind nur die Richtungsangaben "eingehend" und "ausgehend" möglich. In Ausführungsalternativen, die zusätzlich bidirektionale Datenströme vorsehen, kann die Richtungsangabe auch "bidirektional" lauten.

Beim Betrieb des Netzknotens 10 in dem in der Tabelle gezeigten Verbindungszustand leitet der Netzknoten 10 die Datenströme g1 und g2 auf die oben beschriebene Weise weiter. Dieser Betrieb beruht also lediglich auf den in der Tabelle enthaltenen verbindungsbezogenen Informationen. Informationen über angeschlossene Endgeräte 12, 12' oder Teilnehmer oder Anbieter werden nicht benötigt und demgemäß auch nicht von dem Netzknoten 10 verwertet oder gespeichert. Damit sind der Umfang des Verbindungsdatenbestands 20 sowie der Verwaltungsaufwand unabhängig von der Anzahl der an eine Punkt-zu-Mehrpunkt-Verbindung angeschlossenen Endgeräte 12, 12' oder Teilnehmer.

Zum Aufbau und Freigeben von Verbindungen (der Punkt-zu-Mehrpunkt-Verbindung insgesamt und der diese bildenden Verbindungszweige) wird das Signalisierungssystem des Telekommunikationsnetzwerks benutzt. Genauer gesagt, sind in dem hier beschriebenen Ausführungsbeispiel Signale zum Anstoßen des Verbindungsaufbaus (im folgenden als SETUP-Nachricht bezeichnet) und zum Freigeben oder Abbauen einer Verbindung (im folgenden als RELEASE-Nachricht bezeichnet) vorgesehen. In Ausführungsalternativen werden andere Nachrichten mit abgewandelten Bedeutungen und/oder zusätzliche Nachrichten verwendet. Solche zusätzliche Nachrichten können beispielsweise zum Anzeigen eines erfolgreichen Verbindungsaufbaus (CONNECT-Nachricht), zum Anzeigen von Fehlerzuständen oder zum Beenden der gesamten Telekommunikationsanwendung durch die Datenquelle vorgesehen sein.

Die Verfahren zum Verbindungsauf- und -abbau, die bei der hier am Beispiel eines Telepartizipationssystems beschriebenen Telekommunikationsanwendung auftreten, werden im folgenden genauer erläutert.

### 1. Beitritt eines Teilnehmers

Der Aufbau einer Punkt-zu-Mehrpunkt-Verbindung erfolgt dezentral dadurch, daß die Teilnehmer sich nacheinander an ein Datenangebot eines Anbieters anschließen. Der Beitritt wird von dem Teilnehmer beziehungsweise dem als Datensenke dienenden Endgerät 12' angestoßen, indem eine SETUP-Nachricht an einen mit dem Endgerät 12' in Verbindung stehenden Netzknoten 10 geschickt wird. Ist dieser Netzknoten 10 bereits an die Punkt-zu-Mehrpunkt-Verbindung angeschlossen, dann leitet er den gewünschten Datenstrom unmittelbar an das beigetretene Endgerät 12' weiter. Andernfalls stellt der Netzknoten 10 seinerseits eine Verbindung mit dem Datenstrom her, indem er die SETUP-Nachricht an einen weiteren Netzknoten 10, 10' leitet, der entweder an die Punkt-zu-Mehrpunkt-Verbindung angeschlossen ist oder dieser (nach einer geeigneten Metrik) zumindest "näher" steht.

Somit wird zum Beitritt eines Teilnehmers ein von dem Endgerät 12' (als zukünftiges Blatt in der baumförmigen Verbindungsstruktur) ausgehender Verbindungszweig in Richtung auf die bereits bestehende Verbindungsstruktur aufgebaut. Das die Datenquelle bildende Endgerät 12 erfährt in dem hier beschriebenen Ausführungsbeispiel nur dann vom Beitritt eines Teilnehmers, wenn der neue Verbindungszweig erst an dem Endgerät 12 auf die bestehende Verbindungsstruktur trifft, so daß die lokale Schnittstellenkonfiguration am Endgerät 12 geändert werden muß. Andernfalls ist das Endgerät 12 von dem Anschluß eines Teilnehmers nicht betroffen. In Ausführungsalternativen kann jedoch vorgesehen sein, daß eine den Anschluß anzeigende Nachricht auf jeden Fall an das Endgerät 12 weitergeleitet wird, um beispielsweise einen Abrechnungsvorgang zu starten.

Die SETUP-Nachricht enthält in dem hier beschriebenen Ausführungsbeispiel einen Datenstrombezeichner und eine Datenquellenadresse. Der Datenstrombezeichner identifiziert die Punkt-zu-Mehrpunkt-Verbindung, zu der der Beitritt erfolgen soll. Die Datenquellenadresse enthält Informationen, die es ermöglichen, SETUP-Nachrichten in Richtung zur Datenquelle hin (beziehungsweise zur bestehenden Baumstruktur hin) weiterzuleiten. Sowohl der Datenstrombezeichner als auch die Datenquellenadresse sind global verfügbar und dem beitretenden Teilnehmer oder Endgerät 12' beispielsweise aus einer Programmzeitschrift, einem geeigneten Verzeichnis oder einer Datenbank bekannt.

In Ausführungsalternativen kann die SETUP-Nachricht weitere Parameter aufweisen, beispielsweise einen Hinweis darauf, daß es sich um einen Beitritt zu einer Telepartizipationsanwendung handelt. Ferner kann in weiteren Ausführungsalternativen der Datenstrombezeichner selbst schon die zum Routing der SETUP-Nachrichten im Telekommunikationsnetzwerk erforderlichen Informationen aufweisen. Eine gesonderte Datenquellenadresse ist dann entbehrlich.

Erhält ein Netzknoten 10, 10' eine SETUP-Nachricht mit dem Datenstrombezeichner g an einer Schnittstelle ix, dann wird zunächst der Datenstrombezeichner g als Bezeichner für einen an der Schnittstelle ix ausgehenden Datenstrom in den Verbindungsdatenbestand 20 eingetragen, indem das Tripel (ix, g, A) dem Verbindungsdatenbestand 20 hinzugefügt wird.

Nun überprüft das Steuermodul 18 des Netzknotens 10, 10', ob bereits ein Datenstrom mit dem Datenstrombezeichner g eingeht, also ob der Verbindungsdatenbestand 20 ein Tripel (iy, g, E) für eine Schnittstelle iy enthält. Ist dies der Fall, so leitet der Netzknoten 10, 10' zukünftig alle mit dem Datenstrombezeichner g eingehenden Daten auch über die Schnittstelle ix in Richtung auf das Endgerät 12' weiter. In Ausführungsalternativen, die eine CONNECT-Nachricht vorsehen, sendet der Netzknoten 10, 10' ferner eine solche Nachricht zur Bestätigung des erfolgreichen Anschlusses an das als Datensenke dienende Endgerät 12'. Der Verbindungsaufbauvorgang ist damit abgeschlossen; insbesondere wird die SETUP-Nachricht in diesem Fall nicht mehr in Richtung zur Datenquelle weitergeleitet.

Geht bei dem Netzknoten 10, 10' noch kein Datenstrom mit dem Datenstrombezeichner g ein, so wählt der Netzknoten 10, 10', basierend auf der Datenquellenadresse, eine Schnittstelle iz aus, um eine Verbindung in Richtung zur Datenquelle aufzubauen. Durch Hinzufügen des Tripels (iz, g, E) wird die Schnittstelle iz für den Datenstrom g als eingehende Schnittstelle in den Verbindungsdatenbestand 20 eingetragen. Ferner wird die SETUP-Nachricht über die Schnittstelle iz weitergeleitet, um die von der Datensenke ausgehende Verbindung zur Datenquelle hin aufzubauen. Ein weiterer Netzknoten 10, 10', der die weitergeleitete SETUP-Nachricht erhält, behandelt diese nach dem eben beschriebenen Verfahren, so als ob diese SETUP-Nachricht unmittelbar von einem Endgerät 12' stammen würde.

### 2. SETUP-Nachricht trifft bei dem die Datenquelle bildenden Endgerät 12 ein

Das die Datenquelle bildende Endgerät 12 ist ähnlich wie der in FIG 2 gezeigte Netzknoten 10 aufgebaut. Insbesondere weist auch das Endgerät 12 zumindest eine Schnittstelle sowie einen Verbindungsdatenbestand 20 auf, wobei jedoch nur ausgehende Verbindungen vorgesehen sind.

Aufgrund des oben in Abschnitt 1 beschriebenen Beitrittsverfahrens erhält die Datenquelle für jeden Datenstrom und jede Schnittstelle nur höchstens eine SETUP-Nachricht (Anschlußanforderung). Trifft eine solche Nachricht an einer Schnittstelle ix mit einem Datenstrombezeichner g ein, überprüft die Datenquelle zunächst einige Fehlerbedingungen. Beispielsweise muß die in der SETUP-Nachricht enthaltene Datenquellenadresse mit der Datenquellenadresse des Endgerätes 12 übereinstimmen, und der Datenstrombezeichner g muß gültig sein. Wird dabei ein Fehler erkannt, so sendet das Endgerät 12 in dem hier beschriebenen Ausführungsbeispiel eine globale RELEASE-Nachricht über die Schnittstelle ix. Die Wirkung dieser Nachricht ist unten in Abschnitt 5 dargestellt.

Werden keine Fehler erkannt, so nimmt das Endgerät 12 die Schnittstelle ix als Schnittstelle für einen ausgehenden Datenstrom mit dem Bezeichner g in den Verbindungsdatenbestand 20 auf und überträgt diesen Datenstrom dann auch (oder ausschließlich, wenn die SETUP-Nachricht von dem ersten Teilnehmer stammte) über die Schnittstelle ix. Ferner sendet das Endgerät 12 in Ausführungsalternativen, die eine CONNECT-Nachricht vorsehen, eine solche Nachricht zur Bestätigung des Verbindungsaufbaus über die Schnittstelle ix.

### 3. Teilnehmer verläßt die Telekommunikationsanwendung

Ebenso wie beim Verbindungsaufbau können einzelne Teilnehmer die Punkt-zu-Mehrpunkt-Verbindung verlassen, ohne daß die anderen Teilnehmer oder die Datenquelle davon betroffen sind. Bei einem von einem Teilnehmer oder einem als Datensenke dienenden Endgerät 12' durch eine Freigabenachricht (RELEASE-Nachricht) angestoßenen Verbindungsabbau wird nur der nicht mehr benötigte Ast der baumförmigen Verbindungsstruktur abgebaut. Die RELEASE-Nachricht pflanzt sich von dem Endgerät 12', das ein Blatt in der Verbindungsstruktur darstellt, in Richtung auf die Wurzel (das Endgerät 12) fort, bis sie auf einen Netzknoten 10, 10' stößt, der auch andere Endgeräte 12' und/oder Netzknoten 10, 10' bedient und daher seine Beteiligung an der Verbindung nicht freigeben kann.

Wenn ein Netzknoten 10, 10' eine RELEASE-Nachricht mit einem Datenstrombezeichner g über eine Schnittstelle ix erhält, überprüft er zunächst, ob dieser Datenstrom im Verbindungsdatenbestand 20 als an der Schnittstelle ix ein- oder ausgehend eingetragen ist. Bei einem eingehenden Datenstrom handelt es sich um eine globale Freigabenachricht von der Datenquelle, deren Behandlung unten in Abschnitt 5 beschrieben wird.

Ist der Datenstrom mit dem Bezeichner g an der Schnittstelle ix dagegen als ausgehend registriert (was nicht ausschließt, daß die als Steuernachricht dienende RELEASE-Nachricht an dieser Schnittstelle eingegangen ist, da Steuernachrichten bidirektional übertragen werden), so liegt eine Abbauanforderung von einer Datensenke beziehungsweise einem Teilnehmer vor. Der diesen Datenstrom und diese Schnittstelle betreffende Eintrag, also das Tripel (ix, g, A), wird daraufhin aus dem Verbindungsdatenbestand 20 entfernt, und die Daten des Datenstroms g werden nicht mehr über die Schnittstelle ix weitergeleitet.

Wenn in dem Netzknoten 10, 10' noch mindestens eine weitere Schnittstelle zur Ausgabe des Datenstroms g aktiv ist, so ist der Verbindungsabbau damit beendet. Der Netzknoten 10, 10' übermittelt den Datenstrom g weiterhin an diese andere Schnittstelle oder anderen Schnittstellen, und die RELEASE-Nachricht wird nicht zur Datenquelle hin weitergegeben. In einer Ausführungsalternative wird ferner eine Bestätigungsnachricht (beispielsweise, je nach dem verwendeten Signalisierungsprotokoll, eine RELEASE-COMPLETE-Nachricht) an die Datensenke ausgegeben.

Wenn der Verbindungsabbau die letzte zur Ausgabe des Datenstroms g aktive Schnittstelle des Netzknotens 10, 10' betroffen hat, sich also im Verbindungsdatenbestand 20 kein weiterer Eintrag der Form (iy, g, A) für eine Schnittstelle iy befindet, pflanzt sich der Abbauvorgang in Richtung zur Baumwurzel fort. Dazu wird die Schnittstelle iz gesucht, an der der Datenstrom g eingeht, also ein Eintrag (iz, g, E) im Verbindungsdatenbestand 20. Dieser Eintrag wird aus dem Verbindungsdatenbestand 20 entfernt, und die RELEASE-Nachricht wird über die Schnittstelle iz an den nächsten, baumwurzelnäheren Netzknoten 10, 10' weitergeleitet. Dieser Netzknoten 10, 10' behandelt die RELEASE-Nachricht dann auf die in diesem Abschnitt beschriebene Weise, als ob sie von einem Endgerät 12' stammen würde.

Falls eine RELEASE-Nachricht an dem als Datenquelle wirkenden Endgerät 12 eintrifft (das heißt, daß der letzte über eine bestimmte Schnittstelle versorgte Teilnehmer die Verbindung zu dem Datenstrom freigegeben hat), schließt das Endgerät 12 die Schnittstelle und entfernt den entsprechenden Eintrag aus seinem Verbindungsdatenbestand 20. Die Verbindung kann jedoch wieder aufleben, wenn ein neuer Teilnehmer beitritt (siehe Abschnitt 2).

### 4. Telekommunikationsanwendung wird durch die Datenquelle beendet

Wenn das als Datenquelle dienende Endgerät 12 die Telekommunikationsanwendung mit dem Datenstrombezeichner g beenden möchte, so sendet es über alle für diesen Datenstrom aktive Schnittstellen ix eine RELEASE-Nachricht und beendet dann die Übertragung des Datenstromes g über diese Schnittstellen. Die entsprechenden Einträge im Verbindungsdatenbestand 20 des Endgerätes 12 werden entfernt.

### 5. Netzknoten 10, 10' erhält eine von dem die Datenquelle bildenden Endgerät 12 stammende RELEASE-Nachricht

Eine an einem Netzknoten 10, 10' über eine Schnittstelle ix eingehende RELEASE-Nachricht mit einem Datenstrombezeichner g wird, wie in Abschnitt 3 bereits beschrieben, zunächst daraufhin überprüft, ob es sich um einen von einem Teilnehmer oder von der Datenquelle angestoßenen Verbindungsabbau handelt. Im ersten Fall, der vorliegt, wenn der Datensatz (ix, g, A) im Verbindungsdatenbestand 20 vorhanden ist, wird die RELEASE-Nachricht gemäß Abschnitt 3 behandelt.

Im zweiten Fall, der vorliegt, wenn der Datensatz (ix, g, E) im Verbindungsdatenbestand 20 vorhanden ist, wird zunächst dieser Datensatz aus dem Verbindungsdatenbestand 20 entfernt. Dann werden alle Schnittstellen bestimmt, die zur Ausgabe des Datenstromes g aktiv sind. Die RELEASE-Nachricht wird an diese Schnittstellen weitergegeben, und die entsprechenden Einträge werden aus dem Verbindungsdatenbestand 20 entfernt. Ferner wird in einer Ausführungsalternative, in der nach dem verwendeten Signalisierungsprotokoll eine Bestätigungsnachricht erforderlich ist, diese (beispielsweise eine RELEASE-COMPLETE-Nachricht) an die Datenquelle ausgegeben.

Sowohl bei dem in Abschnitt 3 als auch bei dem in diesem Abschnitt beschriebenen Verbindungsabbauverfahren kann es vorkommen, daß sich zwei von einem Teilnehmer beziehungsweise von der Datenquelle stammende RELEASE-Nachrichten überkreuzen. Die spätere Nachricht erreicht in diesem Fall einen Netzknoten 10, 10' erst dann, wenn dieser die Verbindung mit dem Bezeichner g schon abgebaut hat und demgemäß keine entsprechenden Einträge mehr im Verbindungsdatenbestand 20 enthalten sind. In diesem Fall verwirft der Netzknoten 10, 10' die später eintreffende RELEASE-Nachricht. Auch hier wird in einer Ausführungsalternative eine RELEASE-COMPLETE-Nachricht über diejenige Schnittstelle ausgegeben, an der die verworfene RELEASE-Nachricht eingegangen ist.

In dem hier beschriebenen Ausführungsbeispiel ist vorgesehen, daß die Datenquelle durch Senden einer RELEASE-Nachricht die gesamte Telekommunikationsanwendung beenden kann. Die von der Datenquelle gesendete RELEASE-Nachricht unterscheidet sich dabei nicht von den RELEASE-Nachrichten, die von den Datensenken stammen. Wie in den Abschnitten 3 und 5 beschrieben ist, erkennt jeder Netzknoten 10, 10' die Bedeutung einer an einer Schnittstelle ix eingehenden RELEASE-Nachricht daran, ob im verbindungsdatenbestand 20 für den entsprechenden Datenstrom an der Schnittstelle ix eine ein- oder ausgehende Datenflußrichtung vermerkt ist.

In einer Ausführungsalternative ist vorgesehen, die RELEASE-Nachricht ausschließlich für den von einer Datensenke angestoßenen Verbindungsabbau einzusetzen, und eine andere Auslösenachricht für das Beenden der Telekommunikationsanwendung durch die Datenquelle zu verwenden. Das Endgerät 12 sendet also (statt der in Abschnitt 4 beschriebenen RELEASE-Nachricht) die andere Auslösenachricht, wenn die Telekommunikationsanwendung beendet werden soll. Die Netzknoten 10, 10' brauchen dann zur Unterscheidung der beiden genannten Fälle die im Verbindungsdatenbestand 20 gespeicherte Datenflußrichtung nicht auszuwerten. Daher ist diese Ausführungsalternative insbesondere zur Verwendung in Systemen vorgesehen, die bidirektionale Datenverbindungen zulassen. Die RELEASE-Nachricht wird in dieser Ausführungsalternative von den Netzknoten 10, 10' immer (also ohne Prüfung der Datenflußrichtung) nach dem in Abschnitt 3 beschriebenen Verfahren verarbeitet, und die andere Auslösenachricht immer nach dem in Abschnitt 5 dargestellten Verfahren.

## Patentansprüche

1. Verfahren zum Steuern eines Netzknotens (10, 10') in einem mehrere Netzknoten (10, 10') und mehrere Endgeräte (12, 12') aufweisenden Telekommunikationsnetzwerk, bei dem der Netzknoten (10, 10') mindestens einen eingehenden Datenstrom an je mindestens einen anderen Netzknoten (10, 10') und/oder mindestens ein Endgerät (12, 12') weiterleitet,
**dadurch gekennzeichnet,**
**daß** der Netzknoten (10, 10') einen Verbindungsdatenbestand (20) mit verbindungsbezogenen Informationen unterhält, welche der Steuerung bestehender Verbindungen zu anderen Netzknoten (10, 10_{'}) des Telekommunikationsnetzwerks dienen, wobei der Netzknoten (10, 10') mehrere Schnittstellen (i1, i2, ...) aufweist und der Verbindungsdatenbestand (20) für jede aktive Schnittstelle (i1, i2, ...) und jeden dort ein- oder ausgehenden Datenstrom einen Datenstrombezeichner (g1, g2, ...) sowie die Richtung (E, A) des Datenflusses angibt.

2. Verfahren nach Anspruch 1,
**dadurch gekennzeichnet,**
**daß** der Verbindungsdatenbestand (20) nur dann aktualisiert wird, wenn der Netzknoten (10, 10') eine SETUP-Nachricht oder eine einen Verbindungsabbau signalisierende Nachricht erhält.

3. Verfahren nach Anspruch 1 oder Anspruch 2,
**dadurch gekennzeichnet,**
**daß** als Reaktion auf einen Empfang einer SETUP-Nachricht an einer Schnittstelle ix mit einem Datenstrombezeichner g eine Verbindung zwischen einer Schnittstelle iy und der Schnittstelle ix hergestellt wird, wobei entweder an der Schnittstelle iy bereits ein Datenstrom mit dem Datenstrombezeichner g eingeht oder die SETUP-Nachricht über die Schnittstelle iy weitergeleitet wird, um einen Aufbau einer Verbindung zu einem solchen Datenstrom anzufordern.

4. Verfahren nach einem der Ansprüche 1 bis 3,
**dadurch gekennzeichnet,**
**daß** beim Empfang einer SETUP-Nachricht an einer Schnittstelle ix mit einem Datenstrombezeichner g die folgenden Schritte ausgeführt werden:
- Aktualisieren des Verbindungsdatenbestands (20), indem ein an der Schnittstelle ix ausgehender Datenstrom mit dem Datenstrombezeichner g eingetragen wird,
- falls im Verbindungsdatenbestand (20) kein eingehender Datenstrom mit dem Datenstrombezeichner g eingetragen ist, dann Auswählen einer Schnittstelle iy, Weiterleiten der SETUP-Nachricht über die Schnittstelle iy und Aktualisieren des Verbindungsdatenbestands (20), indem ein eingehender Datenstrom an der Schnittstelle iy mit dem Datenstrombezeichner g eingetragen wird, und
- Weiterleiten des an der Schnittstelle iy eingehenden Datenstroms mit dem Datenstrombezeichner g an oder auch an die Schnittstelle ix entsprechend dem Verbindungsdatenbestand (20).

5. Verfahren nach einem der Ansprüche 1 bis 4,
**dadurch gekennzeichnet,**
**daß** beim Empfang einer RELEASE-Nachricht an einer Schnittstelle ix mit einem Datenstrombezeichner g, wobei die RELEASE-Nachricht einen von einer Datensenke angestoßenen Verbindungsabbau signalisiert, eine bestehende Verbindung zwischen einer Schnittstelle iy, an der ein Datenstrom mit dem Datenstrombezeichner g eingeht, und der Schnittstelle ix gelöst wird, wobei ferner die RELEASE-Nachricht über die Schnittstelle iy weitergeleitet wird, wenn die Schnittstelle ix die einzige Schnittstelle war, an die der Datenstrom mit dem Datenstrombezeichner g zur Ausgabe weitergeleitet wurde.

6. Verfahren nach einem der Ansprüche 1 bis 5,
**dadurch gekennzeichnet,**
**daß** beim Empfang einer RELEASE-Nachricht an einer Schnittstelle ix mit einem Datenstrombezeichner g, wobei die RELEASE-Nachricht einen von einer Datensenke angestoßenen Verbindungsabbau signalisiert, die folgenden Schritte ausgeführt werden:
- Beenden der Weitergabe des Datenstroms mit dem Datenstrombezeichner g an die Schnittstelle ix,
- Aktualisieren des Verbindungsdatenbestands (20), indem der die Schnittstelle ix und den Datenstrom mit dem Datenstrombezeichner g betreffende Eintrag entfernt wird, und
- falls im Verbindungsdatenbestand (20) kein weiterer ausgehender Datenstrom mit dem Datenstrombezeichner g eingetragen ist, dann Weiterleiten der RELEASE-Nachricht an diejenige Schnittstelle iy, an der der Datenstrom mit dem Datenstrombezeichner g eingeht, und Aktualisieren des Verbindungsdatenbestands (20), indem der die Schnittstelle iy und den Datenstrom mit dem Datenstrombezeichner g betreffende Eintrag entfernt wird.

7. Verfahren nach einem der Ansprüche 1 bis 6,
**dadurch gekennzeichnet,**
**daß** beim Empfang einer Nachricht, die einen von einer Datenquelle angestoßenen Verbindungsabbau signalisiert, wobei die Nachricht mit einem Datenstrombezeichner g empfangen wird, die folgenden Schritte ausgeführt werden:
- Beenden der Weitergabe des Datenstroms mit dem Datenstrombezeichner g,
- Weiterleiten der Nachricht an alle Schnittstellen, über die der Datenstrom mit dem Datenstrombezeichner g ausgegeben wurde, und
- Aktualisieren des Verbindungsdatenbestands (20), indem alle den Datenstrombezeichner g betreffenden Einträge entfernt werden.

8. Verfahren zum Steuern eines Telekommunikationsnetzwerks mit mehreren Netzknoten (10, 10') und mehreren Endgeräten (12, 12'), wobei mindestens eines der Endgeräte (12) als Datenquelle und mindestens eines der Endgeräte (12') als Datensenke dient und wobei jeder Netzknoten (10, 10') mindestens einen eingehenden Datenstrom an je mindestens einen anderen Netzknoten (10, 10') und/oder mindestens ein Endgerät (12, 12') weiterleitet,
**dadurch gekennzeichnet,**
**daß** jeder Netzknoten (10, 10') einen Verbindungsdatenbestand (20) mit verbindungsbezogenen Informationen unterhält, die zur Steuerung bestehender Verbindungen zu anderen Netzknoten (10, 10') des Telekommunikationsnetzwerks dienen, wobei der Verbindungsdatenbestand (20) für jede aktive Schnittstelle (i1, i2, ...) und jeden dort ein- oder ausgehenden Datenstrom einen Datenstrombezeichner (g1, g2, ...) sowie die Richtung (E, A) des Datenflusses angibt.

9. Verfahren nach Anspruch 8,
bei dem das mindestens eine als Datenquelle dienende Endgerät (12) einen Verbindungsdatenbestand (20) mit verbindungsbezogenen Informationen unterhält.

10. Verfahren nach Anspruch 8 oder 9,
bei dem in jedem Netzknoten (10, 10') ein Verfahren nach einem der Ansprüche 2 bis 8 ausgeführt wird.

11. Netzknoten (10, 10') für ein mehrere Netzknoten (10, 10') und mehrere Endgeräte (12, 12') aufweisendes Telekommunikationsnetzwerk, der mehrere Schnittstellen (i1, i2, ...), ein Steuermodul (18) mit einem Verbindungsdatenbestand (20) und ein Verbindungsmodul (14) aufweist und dazu eingerichtet ist, einen an einer Schnittstelle (i1, i2, ...) eingehenden Datenstrom an je mindestens eine andere Schnittstelle (i1, i2, ...) weiterzuleiten,
**dadurch gekennzeichnet,**
**daß** der Verbindungsdatenbestand (20) verbindungsbezogene Informationen enthält und der Netzknoten (10, 10') dazu eingerichtet ist, die Steuerung bestehender Verbindungen zu anderen Netzknoten (10, 10') des Telekommunikationsnetzwerks anhand der verbindungsbezogenen Informationen vorzunehmen, wobei der Verbindungsdatenbestand (20) für jede aktive Schnittstelle (i1, i2, ...) und jeden dort ein- oder ausgehenden Datenstrom eine Angabe über einen Datenstrombezeichner (g1, g2, ...) sowie die Richtung (E, A) des Datenflusses aufweist.

12. Netzknoten (10, 10') nach Anspruch 11,
**dadurch gekennzeichnet,**
**daß** der Netzknoten (10, 10') zum Ausführen eines Verfahrens nach einem der Ansprüche 2 bis 8 eingerichtet ist.

## Claims

1. Method for controlling a network node (10, 10') in a telecommunications network having a plurality of network nodes (10, 10') and a plurality of terminals (12, 12'), in which each network node (10, 10') forwards at least one incoming data stream to at least one other network node (10, 10') and/or at least one terminal (12, 12'),
**characterised in that**
the network node (10, 10') maintains a connection database (20) containing connection-related information which is used to control existing connections to other network nodes (10, 10') in the telecommunications network, the network node (10, 10') having a plurality of interfaces (i1, i2, ...), and the connection database (20) specifying both a data stream identifier (g1, g2, ...) and the direction (I, O) of the data flow for each active interface (i1, i2, ...) and each incoming or outgoing data stream on each interface concerned.

2. Method according to Claim 1, **characterised in that**
the connection database (20) is only updated when the network node (10, 10') receives a SETUP message or a message signalling a connection release.

3. Method according to Claim 1 or Claim 2, **characterised in that** in reaction to receiving a SETUP message on an interface ix having a data stream identifier g a connection between an interface iy and the interface ix is set up, whereby either a data stream with the data stream identifier g is already incoming on the interface iy or the SETUP message is forwarded via the interface iy in order to request a connection to be set up to such a data stream.

4. Method according to one of the Claims 1 to 3, **characterised in that** when a SETUP message is received on an interface ix with a data stream identifier g the following steps are executed:
- update the connection database (20) by entering an outgoing data stream with the data stream identifier g on the interface ix,
- if the connection database (20) does not contain any incoming data stream having the data stream identifier g, select an interface iy, forward the SETUP message via the interface iy and update the connection database (20) by entering an incoming data stream on the interface iy with the data stream identifier g, and
- forward the data stream with the data stream identifier g that is incoming on the interface iy to or also to the interface ix corresponding to the connection database (20).

5. Method according to one of the Claims 1 to 4, **characterised in that** when a RELEASE message is received on an interface ix with a data stream identifier g, where the RELEASE message signals a connection release initiated by a data sink, an existing connection between an interface iy, on which there is an incoming data stream with the data stream identifier g, and the interface ix is released, the RELEASE message then being forwarded via the interface iy if the interface ix was the only interface to which the data stream with the data stream identifier g was forwarded for output.

6. Method according to one of the Claims 1 to 5, **characterised in that** when a RELEASE message is received on an interface ix with a data stream identifier g, where the RELEASE message signals a connection release initiated by a data sink, the following steps are executed:
- discontinue forwarding the data stream with the data stream identifier g to the interface ix,
- update the connection database (20) by removing the entry concerning the interface ix and the data stream with the data stream identifier g, and
- if the connection database (20) contains no further outgoing data stream with the data stream identifier g, forward the RELEASE message to the interface iy on which there is an incoming data stream with the data stream identifier g, and update the connection database (20) by removing the entry concerning the interface iy and the data stream with the data stream identifier g.

7. Method according to one of the Claims 1 to 6, **characterised in that** on receiving a message which signals a connection release initiated by a data source, where the message is received with a data stream identifier g, the following steps are executed:
- discontinue forwarding the data stream with the data stream identifier g,
- forward the message to all interfaces via which the data stream with the data stream identifier g was being output, and
- update the connection database (20) by removing all entries concerning the data stream identifier g.

8. Method for controlling a telecommunications network having a plurality of network nodes (10, 10') and a plurality of terminals (12, 12'), in which at least one of the terminals (12) acts as the data source and at least one of the terminals (12') acts as the data sink, and in which each network node (10, 10') forwards at least one incoming data stream to at least one other network node (10, 10') and/or at least one terminal (12, 12'),
**characterised in that**
each network node (10, 10') maintains a connection database (20) containing connection-related information which is used to control existing connections to other network nodes (10, 10') in the telecommunications network, the connection database (20) specifying both a data stream identifier (g1, g2, ...) and the direction (I, O) of the data flow for each active interface (i1, i2, ...) and each incoming or outgoing data stream on each interface concerned.

9. Method according to Claim 8, in which at least one terminal (12) acting as a data source maintains a connection database (20) with connection-related information.

10. Method according to Claim 8 or 9, in which a method according to one of the Claims 2 to 8 is carried out in each network node (10, 10').

11. Network node (10, 10') for a telecommunications network which has a plurality of network nodes (10,10') and a plurality of terminals (12, 12'), said node having a plurality of interfaces (i1, i2, ...), a control module (18) with a connection database (20), and a connection module (14), and being set up to forward a data stream that is incoming on an interface (i1, i2, ...) to at least one other interface (i1, i2, ...),
**characterised in that**
the connection database (20) maintains connection-related information and the network node (10, 10') is set up to control existing connections to other network nodes (10, 10') in the telecommunications network with the aid of the connection-related information, the connection database (20) having an indicator concerning data stream identifiers (g1, g2, ...) and the direction (I, O) of the data flow for each active interface (i1, i2, ...) and each incoming or outgoing data stream on each interface concerned.

12. Network node (10, 10') according to Claim 11, **characterised in that** the network node (10, 10') is set up to carry out a method according to one of the Claims 2 to 8.

## Revendications

1. Procédé pour commander un noeud de réseau (10, 10') dans un réseau de télécommunication comportant plusieurs noeuds de réseau (10, 10') et plusieurs équipements terminaux (12, 12'), dans lequel le noeud de réseau (10, 10') transfère au moins un flot de données entrant vers respectivement au moins un autre noeud de réseau (10, 10') et/ou au moins un équipement terminal (12, 12'),
**caractérisé en ce que**
le noeud de réseau (10, 10') entretient un stock de données de connexion (20) contenant des informations relatives à la connexion lesquelles servent à commander des connexions existantes vers d'autres noeuds de réseau (10, 10') du réseau de télécommunication, ledit noeud de réseau (10, 10') ayant plusieurs interfaces (i1, i2, ...) et ledit stock de données de connexion (20) indiquant pour chaque interface active (i1, i2, ...) et chaque flot de données y entrant ou sortant un indicateur de flot de données (g1, g2, ...) ainsi que le sens (E, A) du flot de données.

2. Procédé selon la revendication 1,
**caractérisé en ce que**
le stock de données de connexion (20) n'est actualisé que lorsque le noeud de réseau (10, 10') reçoit un message SETUP ou un message signalant une libération de connexion.

3. Procédé selon la revendication 1 ou la revendication 2,
**caractérisé en ce que**
comme réaction à une réception d'un message SETUP à une interface ix avec un indicateur de flot de données g une connexion est établie entre une interface iy et l'interface ix et dans ce cas ou bien un flot de données avec l'indicateur de flot de données g entre déjà à l'interface iy ou bien le message SETUP est transféré via l'interface iy pour demander un établissement d'une connexion vers un tel flot de données.

4. Procédé selon l'une des revendications 1 à 3,
**caractérisé en ce que**
à la réception d'un message SETUP à une interface ix avec un indicateur de flot de données g, les étapes suivantes sont effectuées :
- actualiser le stock de données de connexion (20) en enregistrant un flot de données sortant à l'interface ix avec l'indicateur de flot de données g,
- si aucun flot de données entrant avec l'indicateur de flot de données g n'est enregistré dans le stock de données de connexion (20), sélectionner une interface iy, transférer le message SETUP via l'interface iy et actualiser le stock de données de connexion (20) en enregistrant un flot de données entrant à l'interface iy avec l'indicateur de flot de données g, et
- transférer le flot de données entrant à l'interface iy avec l'indicateur de flot de données g vers ou également vers l'interface ix selon le stock de données de connexion (20).

5. Procédé selon l'une des revendications 1 à 4,
**caractérisé en ce que**
à la réception d'un message RELEASE à une interface ix avec un indicateur de flot de données g, le message RELEASE signalant une libération de connexion initiée par un collecteur de données, une connexion existante entre une interface iy à laquelle entre un flot de données avec l'indicateur de flot de données g, et ladite interface ix est supprimée, le message RELEASE étant en outre transféré via l'interface iy si l'interface ix était la seule interface à laquelle le flot de données avec l'indicateur de flot de données g a été transféré vers la sortie.

6. Procédé selon l'une des revendications 1 à 5,
**caractérisé en ce que**
à la réception d'un message RELEASE à une interface ix avec un indicateur de flot de données g, le message RELEASE signalant une libération de connexion initiée par un collecteur de données, les étapes suivantes sont effectuées :
- terminer le transfert du flot de données avec l'indicateur de flot de données g vers l'interface ix,
- actualiser le stock de données de connexion (20) en supprimant l'enregistrement relatif à l'interface ix et au flot de données avec l'indicateur de flot de données g, et
- si aucun autre flot de données sortant avec l'indicateur de flot de données g n'est enregistré dans le stock de données de connexion (20), transférer le message RELEASE vers l'interface iy à laquelle entre le flot de données avec l'indicateur de flot de données g et actualiser le stock de données de connexion (20) en supprimant l'enregistrement relatif à l'interface iy et au flot de données avec l'indicateur de flot de données g.

7. Procédé selon l'une des revendications 1 à 6,
**caractérisé en ce que**
à la réception d'un message signalant une libération de connexion initiée par une source de données, le message étant reçu avec un indicateur de flot de données g, les étapes suivantes sont effectuées :
- terminer le transfert du flot de données avec l'indicateur de flot de données g,
- transférer le message à toutes les interfaces via lesquelles le flot de données avec l'indicateur de flot de données g a été sorti, et
- actualiser le stock de données de connexion (20) en supprimant tous les enregistrements relatifs à l'indicateur de flot de données g.

8. Procédé pour commander un réseau de télécommunication comportant plusieurs noeuds de réseau (10, 10') et plusieurs équipements terminaux (12, 12'), dans lequel au moins un des équipements terminaux (12) sert de source de données et au moins un des équipements terminaux (12') de collecteur de données et dans lequel chaque noeud de réseau (10, 10 ') transfère au moins un flot de données entrant vers respectivement au moins un autre noeud de réseau (10, 10') et/ou au moins un équipement terminal (12, 12'),
**caractérisé en ce que**
chaque noeud de réseau (10, 10') entretient un stock de données de connexion (20) contenant des informations relatives à la connexion lesquelles servent à commander des connexions existantes vers d'autres noeuds de réseau (10, 10') du réseau de télécommunication, le stock de données de connexion (20) indiquant pour chaque interface active (i1, i2, ...) et chaque flot de données y entrant ou sortant un indicateur de flot de données (g1, g2, ...) ainsi que le sens (E, A) du flot de données.

9. Procédé selon la revendication 8,
dans lequel l'au moins un équipement terminal (12) servant de source de données entretient un stock de données de connexion (20) contenant des informations relatives à la connexion.

10. Procédé selon la revendication 8 ou 9,
dans lequel un procédé selon l'une des revendications 2 à 8 est réalisé dans chaque noeud de réseau (10, 10').

11. Noeud de réseau (10, 10') pour un réseau de télécommunication comportant plusieurs noeuds de réseau (10, 10') et plusieurs équipements terminaux (12, 12'), lequel noeud de réseau a plusieurs interfaces (i1, i2, ...), un module de commande (18) avec un stock de données de connexion (20) et un module de connexion (14) et est configuré pour transférer un flot de données entrant à une interface (i1, i2, ...) vers respectivement au moins une autre interface (i1, i2, ...),
**caractérisé en ce que**
le stock de données de connexion (20) contient des informations relatives à la connexion et le noeud de réseau (10, 10') est configuré pour effectuer la commande de connexions existantes vers d'autres noeuds de réseau (10, 10') du réseau de télécommunication à l'aide des informations relatives à la connexion, le stock de données de connexion (20) comportant pour chaque interface active (i1, i2, ...) et chaque flot de données y entrant ou sortant une indication sur un indicateur de flot de données (g1, g2, ...) ainsi que le sens (E, A) du flot de données.

12. Noeud de réseau (10, 10') selon la revendication 11,
**caractérisé en ce que**
le noeud de réseau (10, 10') est configuré pour réaliser un procédé selon l'une des revendications 2 à 8.
